# EUROPÄISCHE PATENTSCHRIFT

(11) **EP 1 232 929 B1**
(45) Veröffentlichungstag und Bekanntmachung des Hinweises auf die Patenterteilung: **08.12.2004**
(21) Anmeldenummer: 02002615.9
(22) Anmeldetag: 05.02.2002
(51) Int. Cl.: B62D 1/19, F16F 7/09

(54) **Sicherheitslenksäule**
Safety steering column
Colonne de direction de sécurité

(30) Priorität: 20.02.2001 DE 10107871
(43) Veröffentlichungstag der Anmeldung: 21.08.2002
(73) Patentinhaber: DaimlerChrysler AG, 70567 Stuttgart (DE)
(72) Erfinder: Klümper, Hans, 21073 Hamburg (DE); Lox, Hanno, 25335 Elmshorn (DE)

(56) Entgegenhaltungen:
- DE-C- 1 755 874
- FR-A- 2 674 646
- GB-A- 1 113 147
- GB-A- 1 120 799
- US-A- 5 074 161
- US-A- 5 152 627
- US-A- 5 709 605

## Beschreibung

Die Erfindung betrifft eine Sicherheitslenksäule für ein Kraftfahrzeug mit einem konzentrisch zu einer Lenkspindel angeordneten, an der Fahrzeugkarosserie befestigten Mantelrohr, das bei einer axialen Stoßeinwirkung unter Energieaufnahme verkürzbar ist, wobei das Mantelrohr aus zwei, verschiedene Durchmesser aufweisenden, zum Teil ineinander liegenden Mantelrohrteilen besteht.

Axiale Schiebesysteme für Lenksäulen sind in verschiedensten Varianten bekannt. Sie dienen dazu, bei einem Unfall und einem dadurch hervorgerufenen Aufprall des Fahrzeuginsassen auf das Lenkrad nachzugeben und dabei Aufprallenergie zu absorbieren. Ihr Wirkprinzip beruht darauf, daß ein auf eine vorbestimmte axiale Belastung der Lenksäule ausgelegtes Sicherungsglied bei einer Überschreitung der vorgegebenen Belastung freigibt, so daß die über das Sicherungsglied miteinander verbundenen Bauteile unter Aufnahme von Energie ineinander geschoben werden können.

So ist beispielsweise aus der DE-OS 1 755 874 eine Sicherheitslenksäule für ein Kraftfahrzeug bekannt, die ein Mantelrohr mit zwei zum Teil ineinander liegenden Mantelrohren aufweist. Die ineinander liegenden Teile des Mantelrohres sind in bestimmten Bereichen konisch ausgebildet. In dem von diesen Bereichen gebildeten gleich breiten kegelmantelförmigen Zwischenraum ist eine Anzahl elastischer Deformationsringe angeordnet. Durch eine bestimmte anfängliche Verschiebung der beiden Mantelrohre in Richtung einer Verkürzung der Sicherheitslenksäule sind die elastischen Deformationsringe radial und die beiden Mantelrohre axial vorgespannt.

Nachteilig an dieser bekannten Sicherheitslenksäule ist, daß die Verschiebekraft zwischen den beiden Mantelrohrteilen nicht eingestellt bzw. nicht an den bestimmten Anwendungsfall angepaßt werden kann, ohne daß die Bauteile selber verändert werden. Der Kraft/Wegverlauf beim Zusammenschieben der Mantelrohrteile ist zudem nicht konstant, sondern fällt in einer für den Fahrer ungünstigen Weise über den Laufweg stark ab. Hinzu kommt, daß zwischen den beiden Mantelrohrteilen keine Sicherung gegen ein radiales Verschieben der Mantelrohrteile gegeneinander vorgesehen ist.

Vor diesem Hintergrund liegt der vorliegenden Erfindung die Aufgabe zugrunde, eine Sicherheitslenksäule für ein Kraftfahrzeug mit einem verkürzbaren Mantelrohr zu schaffen, bei dem die Verschiebekraft zwischen den beiden Mantelrohrteilen eingestellt werden kann.

Diese Aufgabe wird erfindungsgemäß durch eine Sicherheitslenksäule für ein Kraftfahrzeug mit den Merkmalen des Patentanspruchs 1 gelöst. Danach zeichnet sich die Erfindung dadurch aus, daß die Sicherheitslenksäule ein konzentrisch zu einer Lenkspindel angeordnetes, an der Fahrzeugkarosserie befestigtes Mantelrohr aufweist, das bei einer axialen Stoßeinwirkung unter Energieaufnahme verkürzbar ist, wobei das Mantelrohr aus zwei verschiedene Durchmesser aufweisenden, zum Teil ineinander liegenden Mantelrohrteilen besteht. Erfindungsgemäß ist zwischen den beiden Mantelrohrteilen ein Verbindungselement angeordnet. Das Verbindungselement ist an einem der Mantelrohrteile befestigt und in eine in das andere Mantelrohrteil eingebrachte Nut mit einer vorbestimmten Kraft eingepreßt.

Über eine Variation der Einpreßkraft des Verbindungselementes in die Nut, kann die Verschiebekraft zwischen den beiden Mantelrohrteilen ohne Veränderung der Bauteile selber eingestellt werden. Wenn im Zusammenhang mit der Erfindung von Verschiebekraft die Rede ist, so ist damit die auf ein Lenkrad einwirkende Kraft gemeint, bei deren Überschreitung das Verbindungselement die Verbindung zwischen den beiden Mantelrohrteilen freigibt und die beiden Teile ineinander geschoben werden. Dadurch, daß das erfindungsgemäße Verbindungselement in die Nut eingepreßt wird, kann das Verschieben nur unter Überwindung einer Reibkraft zwischen dem Verbindungselement und der Nut im Mantelrohrteil erfolgen. Diese dient dazu, Aufprallenergie zu absorbieren.

Das Einstellen der Verschiebekraft ist insbesondere dann von Vorteil, wenn die vom Mantelrohr umgebene Lenkspindel ebenfalls ineinander schiebbar gestaltet und so ausgelegt ist, daß sie dabei Energie absorbiert. Dann kann nämlich die Verschiebekraft des Mantelrohres im Montageprozeß individuell auf den gemessenen Ist-Wert eines sich im Lenkspindelstrang befindlichen Crashelementes eingestellt werden, so daß die Sicherheitslenksäule optimal ausgelegt ist.

Hinzu kommt, daß die Verschiebekraft der erfindungsgemäßen Sicherheitslenksäule über den Weg konstant ist. Das bedeutet, daß unabhängig davon, wie weit die beiden Teile des Mantelrohres ineinander geschoben sind, die Verschiebekraft immer die selbe ist.

Ein weiterer Vorteil der Erfindung ist darin zu sehen, daß das Crashsystem reversibel ist, daß heißt, daß ein einmal bei einem Crash zusammengeschobenes Mantelrohr wieder auseinandergezogen und über das Crashelement eingestellt werden kann.

Gemäß einer bevorzugten Ausführungsform weisen die Nut in einem der Mantelrohrteile sowie das in die Nut eingreifende Verbindungselement bezogen auf eine Schnittebene, die senkrecht zu einer Längsachse durch beide Mantelrohrteile ausgerichtet ist, eine konische Querschnittsfläche auf, so daß nach dem Einpressen des Verbindungselementes in die Nut eine formschlüssige Verbindung entsteht und somit in radialer Richtung kein Spiel zwischen den beiden Mantelrohrteilen besteht. Das ist wichtig, weil an dem in den Fahrzeuginnenraum weisenden Mantelrohrteil Bedienelemente befestigt sind, wie beispielsweise der Hebel zur Betätigung des Blinkers. Eine Kraftausübung auf diesen Hebel darf sich nicht so auf das System der Sicherheitslenksäule auswirken, daß beispielsweise ein Mantelrohrteil relativ zu dem anderen verschoben wird. Das wird durch die radiale Spielfreiheit aufgrund der konischen Ausführungsform vermieden.

Dasselbe gilt für die axiale Richtung. In dieser Richtung wird die Spielfreiheit bis zu einer durch die Verschiebekraft vorgegebenen Grenze durch das Einpressen des Verbindungselementes in die Nut gewährleistet.

Gemäß einer weiteren Ausführungsform wird das Verbindungselement mittels mindestens einer Schraube in die konische Nut gepreßt. Das ist deshalb besonders vorteilhaft, weil sich damit über das Anziehmoment der Schrauben die Verschiebekraft besonders einfach einstellen bzw. anpassen läßt. Schrauben können auch noch während der Montage entsprechend den individuellen Anforderungen von Hand eingestellt werden.

Besonders vorteilhaft hat sich herausgestellt, wenn die Schraube ein konisches Ende aufweist, welches in eine entsprechende Ausnehmung in dem Verbindungselement eingreift. Eine solche Verbindung bringt ebenfalls Vorteile bei Montage mit sich, da die Schraube sich über die konische Form automatisch in die entsprechende Ausnehmung in dem Verbindungselement hineinzieht und es nicht erforderlich ist, das Verbindungselement von Hand so auszurichten, daß es mit der Schraube zusammenwirken.

Bevorzugt ist die Nut in die Außenwand des Mantelrohrteils eingebracht, welches den kleineren Durchmesser aufweist. Entsprechend greift die Schraube mit ihrem Gewinde in ein Gewinde in dem Mantelrohrteil ein, das den größeren Durchmesser aufweist.

Dadurch wird die Montage besonders einfach, weil die Schraube von außen gut zugänglich ist.

Um die Verschiebekraft gezielt einstellen zu können, kann es von Vorteil sein, als Verbindungselement ein Gleitstück zu nehmen, bei dem zumindest die Oberfläche, auf der die beiden Mantelrohrteile im Falle eines Zusammenschiebens gegeneinander abgleiten, eine definierte Rauigkeit aufweist, so daß die Reibkraft zwischen den beiden Mantelrohrteilen nach Anziehen der Schraube genau bestimmt werden kann. Vorteilhafterweise kann auch die Oberfläche der Nut, daß heißt deren Rauheit auf die Oberfläche des Gleitstücks abgestimmt sein. Bevorzugt sind beide Oberflächen eben und glatt ausgeführt. Auf diese Weise kann die Verschiebekraft zuverlässig eingestellt werden.

Es ist auch denkbar das erfindungsgemäße Verbindungselement bei einer Lenksäule einzusetzen, die für einen Crash zusammenschiebbar ausgeführt ist. In diesem Fall müssen bei der Auslegung jedoch die bei einer Lenksäule zusätzlich auftretenden Torsionsmomente berücksichtigt werden.

Im folgenden wird die Erfindung anhand des in der Zeichnung dargestellten Ausführungsbeispiels des nähren erläutert. Es zeigen:
- Fig.1:: einen Längsschnitt durch eine erfihdungsgemäße Sicherheitslenksäule;
- Fig.2:: eine vergrößerte Detaildarstellung einer Verbindung zwischen zwei Mantelrohrteilen und
- Fig.3:: eine Draufsicht und zwei Schnittdarstellung eines Verbindungselementes zwischen den zwei Mantelrohrteilen.

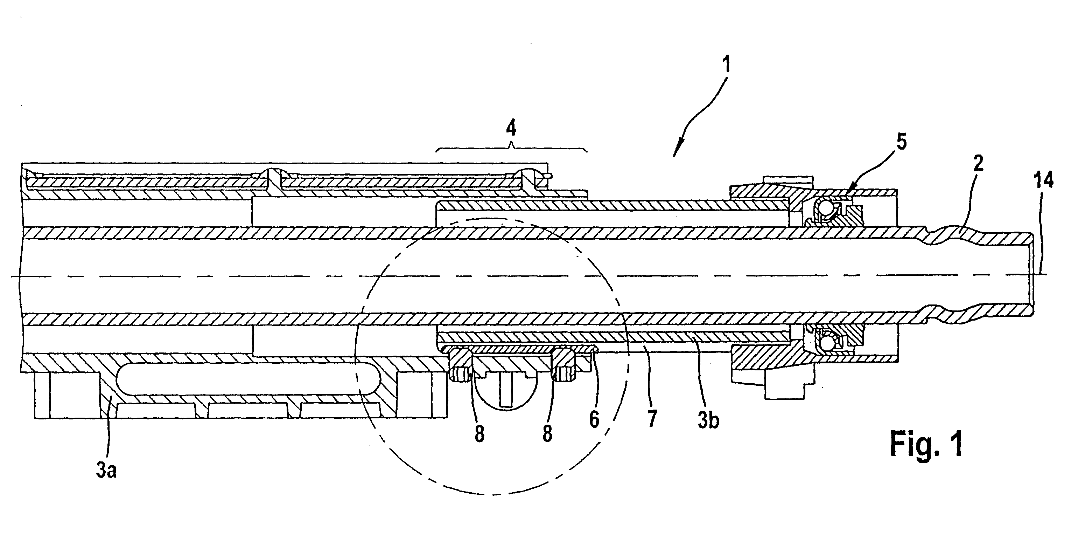

In Fig. 1 ist ein Längsschnitt durch eine erfindungsgemäße Sicherheitslenksäule 1 dargestellt. Die Lenksäule 1 weist eine Lenkspindel 2 auf. In der Zeichnung ist der Mechanismus zum axialen Verkürzen der Lenkspindel 2 nicht dargestellt. Dieser kann gemäß den aus dem Stand der Technik bekannten Lösungen gestaltet sein.

Die Lenksäule 1 weist zudem ein Mantelrohr 3 auf, das aus einem Teil 3a mit einen größeren Durchmesser und einem Teil 3b mit einem kleineren Durchmesser besteht. Die beiden Mantelrohrteile 3a und 3b liegen in dem Bereich 4 teilweise ineinander. In diesem Bereich stehen sie miteinander in Verbindung. Das Mantelrohrteil 3a ist über eine nicht dargestellte Verbindung an der Fahrzeugkarosserie befestigt. Das Mantelrohrteil 3b weist an seinem von dem Mantelrohrteil 3a wegweisenden Ende eine Lagerung 5 auf, die eine Drehung der Lenkspindel 2 in dem Mantelrohr 3 gewährleistet. Das Mantelrohrteil 3b weist in den Fahrzeuginnenraum und dient unter anderem der Befestigung von Bedienelementen, wie beispielsweise einem Blinker.

Die Verbindung der beiden Mantelrohrteile 3a und 3b erfolgt über ein Verbindungselement in Form eines Gleitstücks 6. Dazu ist in die nach außen weisende Oberfläche des innenliegenden Mantelrohrteils 3b eine Nut 7 eingebracht. In dieser Nut 7 liegt das Gleitstück 6. Es ist über Schrauben 8 an dem außenliegenden Mantelrohrteil 3a festgelegt.

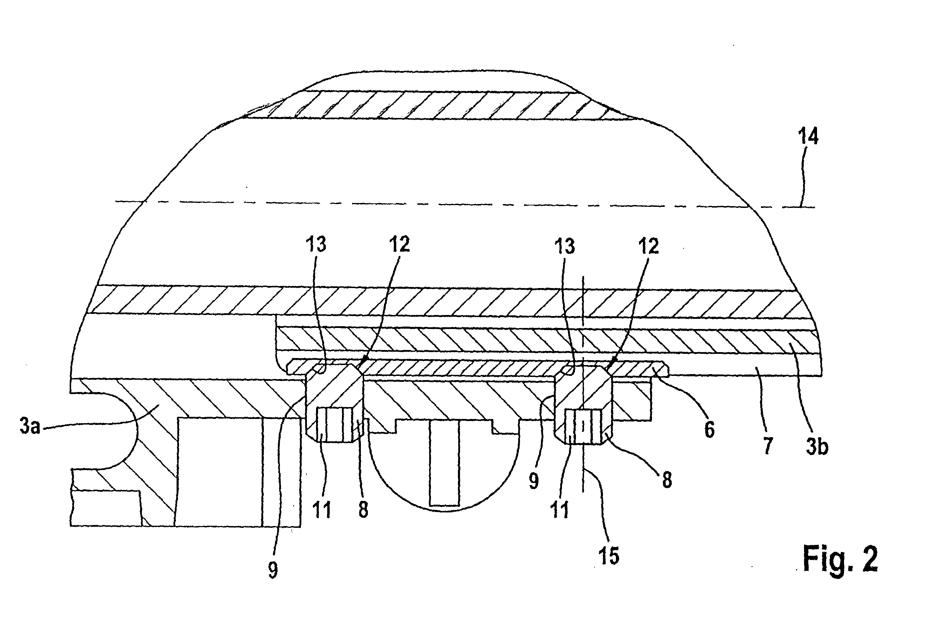

Wie aus der Detaildarstellung gemäß Fig. 2 ersichtlich, greifen die Schrauben 8 in Bohrungen 9 mit einem nicht dargestellten Gewinde ein, die in das Mantelrohrteil 3a eingebracht sind. Die Bohrungen 9 gehen durch das Mantelrohrteil 3a durch und die Schrauben 8 erstrecken sich komplett durch diese Bohrungen 9. Nach außen weisen sie eine Eingriffsmögichkeit 11 für Werkzeuge zum Anziehen der Schrauben 8 auf. Nach innen, daß heißt dem innenliegenden Mantelrohrteil 3b zugewandt sind die Schrauben 8 mit einem konischen Kopf 12 ausgerüstet. Dieser konische Kopf 12 der Schrauben 8 greift in entsprechende Ausnehmungen 13 in dem Gleitstück 6 ein.

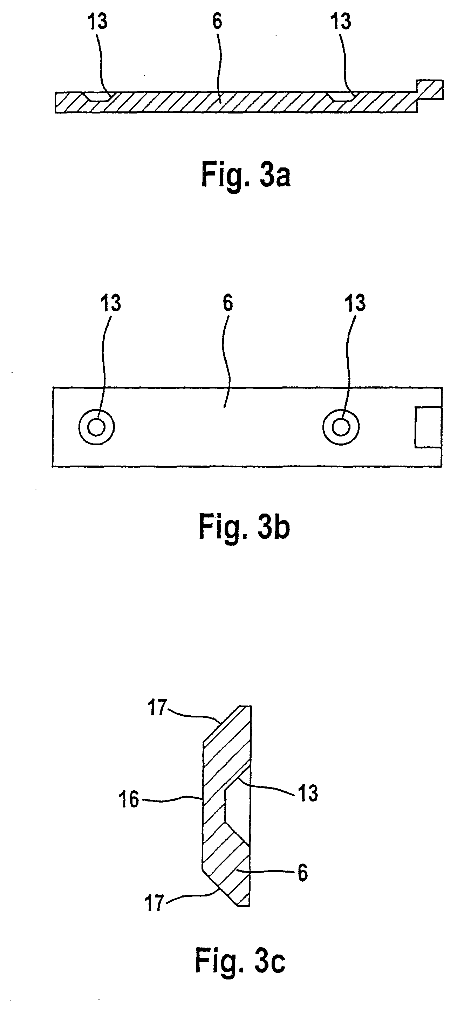

Das Gleitstück 6 und die Nut 7 haben einen konischen Querschnitt, wenn man von einer Schnittebene 15 ausgeht, die senkrecht zu einer Längsachse 14 des Mantelrohres 3 ausgerichtete ist. Dies geht aus Fig. 3c hervor, in der ein solcher Querschnitt des Gleitstücks 6 dargestellt ist. Fig. 3c kann ebenfalls die konische Ausnehmung 13 entnommen werden, in die die Köpfe 12 der Schrauben 8 eingreifen. Die Fig. 3a und 3b verdeutlichen wie die Ausnehmungen 13 auf dem Gleitstück 6 zueinander angeordnet sind.

Die Oberfläche 16 des Gleitstücks 6 kann so gestaltet sein, daß eine vorgegebene Rauigkeit eingestellt ist. Dasselbe gilt für die konischen Flächen 17 und die entsprechenden Flächen der Nut 7. Über die Flächen 16 und 17 des Gleitstücks 6 rutschen die Mantelrohrteile 3a und 3b im Falle eines axialen Verschiebens aufeinander ab.

## Patentansprüche

1. Sicherheitslenksäule für ein Kraftfahrzeug, mit einem konzentrisch zu einer Lenkspindel angeordneten, an der Fahrzeugkarosserie befestigten Mantelrohr, das bei einer axialen Stoßeinwirkung unter Energieaufnahme verkürzbar ist, wobei das Mantelrohr aus zwei verschiedene Durchmesser aufweisenden, zum Teil ineinander liegenden Mantelrohrteilen besteht,
**dadurch gekennzeichnet,**
**daß** zwischen den beiden Mantelrohrteilen (3a, 3b) ein Verbindungselement (6) angeordnet ist, wobei das Verbindungselement an einem der Mantelrohrteile (3b) befestigt und in eine in das andere Mantelrohrteil (3a) eingebrachte Nut (7) mit einer vorbestimmten Kraft eingepreßt ist.

2. Sicherheitslenksäule nach Anspruch 1
**dadurch gekennzeichnet,**
**daß** die Nut (7) und das Verbindungselement (6) bezogen auf eine Schnittebene, die senkrecht zu einer Längsachse (14) durch beide Mantelrohrteile (3a, 3b) ausgerichtet ist, eine konische Querschnittsfläche aufweisen.

3. Sicherheitslenksäule nach Anspruch 1 oder 2,
**dadurch gekennzeichnet,**
**daß** das Verbindungselement (6) mittels mindestens einer Schraube (8) in die Nut (7) gepreßt ist.

4. Sicherheitslenksäule nach einem der vorhergehenden Ansprüche,
**dadurch gekennzeichnet,**
**daß** die Schraube (8) ein konisches Ende (12) aufweist, welches in eine entsprechende Ausnehmung (13) in dem Verbindungselement (6) eingreift.

5. Sicherheitslenksäule nach einem der vorhergehenden Ansprüche,
**dadurch gekennzeichnet,**
**daß** die Nut (7) in die Außenseite des Mantelrohrteils (3b) mit dem kleineren Durchmesser eingebracht ist.

6. Sicherheitslenksäule nach Anspruch 4,
**dadurch gekennzeichnet,**
**daß** die Schraube (8) mit ihrem Gewinde in das Mantelrohrteil (3a) eingreift, das den größeren Durchmesser aufweist.

7. Sicherheitslenksäule nach einem der vorhergehenden Ansprüche,
**dadurch gekennzeichnet,**
**daß** das Verbindungselement (6) ein Gleitstück ist.

8. Sicherheitslenksäule nach Anspruch 7,
**dadurch gekennzeichnet,**
**daß** zumindest die Oberfläche des Gleitstücks (6) auf der die beiden Mantelrohrteile (3a, 3b) im Falle eines Zusammenschiebens gegeneinander abgleiten, eine definierte Rauigkeit aufweist.

## Claims

1. A safety steering column for a motor vehicle having a jacket tube which is positioned concentrically in relation to a steering shaft and fixed to the vehicle body and which is able to shorten in the event of the effect of an axial impact thereby absorbing energy, the jacket tube consisting of two jacket tube parts with different diameters which are positioned partially inside one another,
**characterised in that**
positioned between the two jacket tube parts (3a, 3b) is a connecting element (6), said connecting element being fixed to one of the jacket tube parts (3b) and being pressed into a channel (7) which is made in the other jacket tube part (3a) with a pre-determined force.

2. A safety steering column in accordance with claim 1,
**characterised in that**
the channel (7) and the connecting element (6) have a conical cross-sectional surface in relation to a cutting plane which is oriented vertically in relation to a longitudinal axis (14) through both jacket tube parts (3a, 3b).

3. A safety steering column in accordance with claim 1 or 2,
**characterised in that**
the connecting element (6) is pressed into the channel (7) by means of at least one screw (8).

4. A safety steering column in accordance with one of the preceding claims,
**characterised in that**
the screw (8) has a conical end (12) which engages in a corresponding recess (13) in the connecting element (6).

5. A safety steering column in accordance with one of the preceding claims,
**characterised in that**
the channel (7) is made in the outside of the jacket tube part (3b) with the smaller diameter.

6. A safety steering column in accordance with claim 4,
**characterised in that**
the thread of the screw (8) engages in the jacket tube part (3a) with the greater diameter.

7. A safety steering column in accordance with one of the preceding claims,
**characterised in that**
the connecting element (6) is a sliding part.

8. A safety steering column in accordance with claim 7,
**characterised in that**
at least the surface of the sliding part (6) on which the two jacket tube parts (3a, 3b) slide past one another when they are pushed together has a defined roughness.

## Revendications

1. Colonne de direction de sécurité pour un véhicule automobile, avec un tube de protection fixé sur la carrosserie du véhicule, disposé concentriquement par rapport à un arbre de direction, lequel peut être raccourci sous l'effet d'un choc axial avec absorption d'énergie, sachant que le tube de protection est composé de deux parties de tube s'emboîtant partiellement et présentant différents diamètres, **caractérisée en ce que**, un élément de connexion (6) est agencé entre les deux parties (3a, 3b) de tube de protection, l'élément de connexion étant fixé sur une des parties (3b) du tube de protection, et étant enfoncé avec une force prédéfinie dans une rainure (7) insérée dans l'autre partie (3a) de tube de protection.

2. Colonne de direction de sécurité selon la revendication 1, **caractérisée en ce que**, la rainure (7) et l'élément de connexion (6) rapportés à un plan de coupe qui est orienté perpendiculairement à un axe longitudinal (14) à travers les deux parties (3a, 3b) de tube de protection, présentent une aire de section transversale conique.

3. Colonne de direction de sécurité selon la revendication 1 ou 2, **caractérisée en ce que**, l'élément de connexion (6) est enfoncé dans la rainure (7) au moyen d'au moins une vis (8).

4. Colonne de direction de sécurité selon une des revendications précédentes, **caractérisée en ce que**, la vis (8) présente une extrémité conique (12) qui s'engage dans un évidement (13) correspondant de l'élément de connexion (6).

5. Colonne de direction de sécurité selon une des revendications précédentes, **caractérisée en ce que**, la rainure (7) est insérée dans la face externe de la partie (3b) du tube de protection en présentant le plus petit diamètre.

6. Colonne de direction de sécurité selon la revendication 4, **caractérisée en ce que**, la vis (8) s'engage avec son filet dans la partie (3a) du tube de protection qui présente le diamètre le plus grand.

7. Colonne de direction de sécurité selon une des revendications précédentes, **caractérisée en ce que**, l'élément de connexion (6) est une pièce coulissante.

8. Colonne de direction de sécurité selon la revendication 7, **caractérisée en ce que**, au moins la surface de la pièce coulissante (6) sur laquelle les deux parties (3a, 3b) de tube de protection glissent l'une contre l'autre en cas de poussée l'une contre l'autre, présente une rugosité définie.
